# EUROPÄISCHE PATENTANMELDUNG

(11) **EP 1 306 204 A1**
(43) Veröffentlichungstag der Anmeldung: **02.05.2003**
(21) Anmeldenummer: 01811035.3
(22) Anmeldetag: 23.10.2001
(51) Int. Cl.: B32B 3/04, B32B 3/26, H02K 3/34

(54) **Schichtwerkstoff zur Fertigung eines nach Art eines U geformten Isolierkanals**

(71) Anmelder: MICAFIL AG, 8048 Zürich (CH)
(72) Erfinder: Piur, Armin, 8957 Spreitenbach (CH)
(74) Vertreter: ABB Patent Attorneys

(57) **Zusammenfassung**

Der Schichtwerkstoff dient der Fertigung eines nach Art eines U geformten Isolierkanals (1). Er enthält mehrere stoffschlüssig miteinander verbundene Lagen (11) eines flexibel ausgeführten, flächigen Isolierstoffs. Ein als Kanalboden verwendbarer und der Basis des U entsprechender erster Abschnitt (12) des Schichtwerkstoffs ist steif ausgeführt. Hingegen sind zwei an den ersten Abschnitt anschliessende, als Kanalwand verwendbare und den beiden Schenkeln des U entsprechende zweite Werkstoffabschnitte (13, 14) flexibel ausgebildet. Diese beiden zweiten Abschnitte (13, 14) sind von Abschnitten der Isolierstofflagen (11) gebildet, die jeweils nach Art eines Büschels am ersten Werkstoffabschnitt (12) gehalten sind.

Durch Einsetzen des erfindungsgemässen Schichtwerkstoffs in eine Rotornut einer rotierenden elektrischen Maschine kann so in äusserst kostengünstiger Weise durch eine sehr geringe Verformungskraft der Isolierkanal gebildet werden. Die gute Verformbarkeit des Schichtwerkstoffs ist dadurch bedingt, dass die einzelnen Lagenabschnitte (11) lediglich an einem am Kanalboden fixierten Scheitel festgesetzt sind, sich sonst aber auf über ihre gesamte Oberfläche gegeneinander frei verschieben lassen. Dadurch werden insbesondere im Bereich enger Radien, wie etwa am Übergang vom Kanalboden zu den Kanalwänden, starke Überdehnung und Knickung und damit mechanische und dielektrische Schwächung der einzelnen Isolierstofflagen (11) vermieden.

## Beschreibung

### TECHNISCHES GEBIET

Bei der Erfindung wird ausgegangen von einem Schichtwerkstoff zur Fertigung eines nach Art eines U geformten Isolierkanals nach dem Oberbegriff von Patentanspruch 1. Die Erfindung betrifft auch ein Verfahren zur Herstellung eines solchen Schichtwerkstoffs sowie einen aus einem solchen Schichtwerkstoff gefertigten Isolierkanal.

Der vorgenannte Schichtwerkstoff enthält mehrere stoffschlüssig miteinander verbundene Lagen eines flexibel ausgeführten, flächigen Isolierstoffs. Ein als Boden des vorgenannten Isolierkanals verwendbarer und der Basis des U entsprechender erster Werkstoffabschnitt des Schichtwerkstoffs ist steif ausgeführt. Hingegen sind zwei an den ersten Abschnitt des Schichtwerkstoffs anschliessende, als Wand des Isolierkanals verwendbare und den beiden Schenkeln des U entsprechende zweite Werkstoffabschnitte flexibel ausgebildet. Der aus dem Schichtwerkstoff geformte Isolierkanal dient in einer Nut des Rotors einer rotierenden elektrischen Maschine, beispielsweise eines Generators, der Isolation eines in die Nut eingebrachten elektrischen Leiters gegenüber dem auf Erde gelegten Rotor. Für den Isolierkanal verwendete Werkstoffe umfassen flexible Kunststoffpapiere, vorzugsweise auf der Basis von Polyamiden, wie etwa Papiere, wie sie unter der Markennamen Nomex^{R} vertrieben werden, Glasfasern, Epoxydharze, Polyimidfolien, etwa solche, wie sie unter dem Markennamen Kapton^{R} in den Handel kommen, sowie Polyesterfolie. Diese Werkstoffe werden gebenenfalls einzeln, vorzugsweise jedoch in Kombination mit einem oder mehreren der genannten Werkstoffe verwendet. Neben diesen vielen Werkstoffkombinationen weisen die Kanäle je nach den geometrischen Abmessungen der Nut ganz unterschiedliche Masse auf. Daher sind am Markt Isolierkanäle mit den verschiedensten Nutformen und Werkstoffkombinationen zu finden.

Die Hersteller der Nutisolation fertigen die Kanäle passgenau, entsprechend der Nutgeometrie. Die Vielzahl der Nutgeometrien erfordern eine grosse Menge an Pressformen. Üblicherweise muss für jede Geometrie eine eigene Form hergestellt werden. Im Hinblick auf standardisierte Rotoren mit grossen Stückzahlen sind die Formkosten nicht relevant. Bei kleinen Serien können die Kosten der Pressformen jedoch eine entscheidende Rolle spielen. Vor allem im Reparaturgeschäft, also dort, wo Rotoren innert kurzer Zeit demontiert und neu isoliert werden, spielen die Formkosten und vor allem die Lieferzeit eine ganz entscheidende Rolle. Oftmals sind die Nutgeometrien dem Auftragnehmer nicht bekannt (Fremdprodukt, alte Maschine etc) und können deswegen erst nach der Demontage der Kupferleiter bestimmt werden. Jedoch müssen die die Nutisolation bewirkenden Isolierkanäle als erstes in die zu reparierende Maschine eingebaut werden. Daher ist es wichtig, dass die für die erwünschte Nutisolation benötigten Isolierkanäle rasch verfügbar sind.

### STAND DER TECHNIK

Ein Schichtwerkstoff zur Fertigung eines U-förmig ausgebildeten Isolierkanal nach dem Oberbegriff von Patentanspruch 1 ist beispielsweise in DE 40 23 903 C1 beschrieben. Der vorbekannte Schichtwerkstof ist aus mehreren Lagen eines flexiblen Isolierstoffs auf der Basis eines aromatischen Polyamids aufgebaut. In einem als Boden des Isolierkanals dienenden, mechanisch hoch belastbaren Abschnitt sind die Isolierstofflagen starr miteinander verbunden. In zwei seitlich an diesen Bodenabschnitt anschliessenden und als Flanken des Isolierkanals dienenden Abschnitten sind die Isolierstofflagen über eine verformbare Haftschicht mit einer Bruchdehnung von typischerweise 100% miteinander verbunden. Durch diese Massnahme wird eine gute Verformbarkeit der aus dem Schichtwerkstoff durch Pressen gefertigten Flanken des Isolierkanals erwartet. Durch lokales Freilassen der Isolierstofflagen wird in den besonders starken gekrümmten Bereichen des Isolierkanals an den beiden Übergangen vom Kanalboden zu den Kanalwänden eine besonders gute Verformbarkeit des Schichtwerkstoffs angestrebt.

### DARSTELLUNG DER ERFINDUNG

Der Erfindung, wie sie in den Patentansprüchen definiert ist, liegt die Aufgabe zugrunde, einen Schichtwerkstoff der eingangs genannten Art anzugeben, mit dem in wirtschaftlich vorteilhafter Weise Nutisolationen mit nahezu beliebiger Geometrie hergestellt werden können, die für die meisten Anwendungen ausreichend gute mechanische und dielektrische Eigenschaften aufweisen.

Beim Schichtwerkstoff nach der Erfindung sind die Isolierstofflagen im Bereich eines als Boden des Isolierkanals dienenden ersten Werkstoffabschnitts starr miteinander verbunden und sind zwei daran anschliessende und jeweils als Kanalwand dienende zweite Werkstoffabschnitte von Abschnitten der Isolierstofflagen gebildet, die jeweils nach Art eines Büschels am ersten Werkstoffabschnitt gehalten sind. Beim Einsetzen des erfindungsgemässen Schichtwerkstoffs in eine Rotornut einer rotierenden elektrischen Maschine kann so in äusserst kostengünstiger Weise ein als Nutisolation dienender Isolierkanal mit guten mechanischen und elektrischen Eigenschaften gebildet werden. Der Isolierkanal weist einen auf dem Nutgrund aufliegenden steifen Kanalboden auf sowie flexibel ausgebildete und daher gut verformbare Kanalwände, welche sich praktisch an jede beliebige Nutform, gleichgültig ob sie abgewinkelt oder abgestuft ausgeführt ist, anpassen lassen. Die gute Verformbarkeit ist dadurch bedingt, dass die einzelnen Lagenabschnitte lediglich an einem am Kanalboden fixierten Scheitel festgesetzt sind, sich sonst aber über ihre gesamte Oberfläche gegeneinander frei verschieben lassen. Dadurch werden insbesondere im Bereich enger Radien, wie etwa am Übergang vom Kanalboden zu den Kanalwänden, Überdehnung und Knickung einzelner Fasern des Isoliermaterials und damit eine mechanische und dielektrische Schwächung des Isolierkanals vermieden. Ein Einreissen und Auswandern des Isolierkanals infolge der hohen Fliehkräfte beim Betrieb der Maschine sowie elektrische Durchschläge werden so auch nach langer Betriebsdauer mit grosser Sicherheit vermieden.

Hierbei ist es fertigungstechnisch günstig, dass die Geometrie der Isolierkanäle in einfacher Weise aus dem Schichtwerkstoff, etwa durch Sägen, Schneiden oder Stanzen, vorm Einsetzen in die Nut festgesetzt werden kann. Eine Vielzahl von Isolierkanälen mit unterschiedlichen geometrischen Abmessungen kann so aus einem Schichtwerkstoff geformt werden.

Es empfiehlt sich, mindestens die nach aussen weisenden Flächen der das Büschel nach aussen begrenzenden beiden Lagenabschnitte mit einem chemikalienresistenten, dielektrisch hochwertigen Lack zu beschichten. Es werden so besonders gute dielektrische Eigenschaften des Isolierkanals erreicht.

Die einander gegenüberliegenden Flächen der Lagenabschnitte können mit einem wärmeschmelzbaren, trockenen Kleblack beschichtet sein. Nach Einbau des Schichtwerkstoffs in die Nut einer elektrischen Maschine kann dann durch Erwärmen ein Verkleben der einzelnen Lagenabschnitte und so ein an die Nufform angepasster Isolierkanal mit verklebten Isolierstofflagen erreicht werden.

Alternativ können die einander gegenüberliegenden Flächen der Lagenabschnitte ebenfalls mit dem chemikalienresistenten, dielektrisch hochwertigen Lack beschichtet werden. Es wird so die Reibung der einzelnen Lagenabschnitte gegeneinander herabgesetzt und zugleich verhindert, dass die Lagenabschnitte Feuchtigkeit aufnehmen können. Die geringe Reibung und die durch die feuchtigkeitsabweisende Wirkung der Lackbeschichtung begünstigte Bildung glatter, wellenfreier Flächen der Lagenabschnitte erleichtern die Herstellung eines mechanisch und dielektrisch einwandfreien Isolierkanals beim Einlegen des Schichtwerkstoffes in die Nut ganz wesentlich.

Der mit dem erfindungsgemässen Schichtwerkstoff hergestellte Isolierkanal zeichnet sich durch eine besonders gute mechanische Festigkeit aus, wenn am ersten Werkstoffabschnitt ein Versteifungselement angebracht ist.

Grundsätzlich kann der erfindungsgemässe Schichtwerkstoff gefertigt werden, indem auf die Isolierstofflagen im Bereich des ersten Werkstoffabschnitts eine heisshärtbare Haftschicht aufgebracht wird und die mit der Haftschicht versehenen Lagen bündig übereinandergestapelt und bei einer die Heisshärtung der Haftschicht ermöglichenden Temperatur miteinander verpresst werden. Das Pressverfahren kann derart schrittweise erfolgen, dass bei jedem Verpressungsschritt jeweils nur ein Teil des ersten Werkstoffabschnitts gebildet wird. Es können so mit kleinen Pressen grossflächige Schichtwerkstoffe hergestellt werden.

Um einen besonders hochwertigen Schichtwerkstoff zu erreichen, empfiehlt es sich jedoch, die Isolierstofflagen vor dem Aufbringen der Haftschicht im Bereich des ersten Werkstoffabschnitts flüssigkeitsdicht abzudecken und danach mit einem chemikalienbeständigen, dielektrisch hochwertigen Lack und mit einem gegebenenfalls zusätzlich verwendeten, wärmeschmelzbaren, trockenen Kleblack zu beschichten.

Bei einem aus dem erfindungsgemässen Schichtstoff gefertigten Isolierkanal werden die Kanalwände durch Verformung der Lagenabschnitte während des Einbaus des Schichtwerkstoffs und eines elektrischen Leiters in eine Nut einer elektrischen Maschine gebildet. Zwischen dem Kanalboden und den Kanalwänden vorgesehene stark gekrümmte Bereiche des Kanals werden von Teilen der zweiten Werkstoffabschnitte gebildet. Hierbei hat es sich aus dielektrischen und mechanischen Gründen als besonders vorteilhaft herausgestellt, ein am ersten Werkstoffabschnitt angebrachtes Versteifungselement bis auf einige Millimeter an die den Übergang des Nutgrundes in die Nutflanken bewirkenden engen Krümmungsradien in der Nutwand heranzuführen. Der Raum zwischen den Enden des Versteifungselements und den Radien wird dann von stark gekrümmten Bereichen der zweiten Werkstoffabschnitte eingenommen.

### KURZE BESCHREIBUNG DER ZEICHNUNGEN

Ein bevorzugtes Ausführungsbeispiel der Erfindung und die damit erzielbaren weiteren Vorteile werden nachfolgend anhand von Zeichnungen näher erläutert. Hierbei zeigt:
- Fig.1: eine Aufsicht auf einen quer zu einer Nut geführten Schnitt durch einen die Nut, einen aus erfindungsgemässen Schichtwerkstoff gefertigten Isolierkanal und einen elektrischen Leiter enthaltenden Teil eines Rotors einer rotierenden elektrischen Maschine,
- Fig.2: eine in Nutrichtung geführte Seitenansicht auf den im Isolierkanal gemäss Fig.1 vorgesehenen Schichtwerkstoff nach der Erfindung vor dessen Einbau in die Nut, und
- Fig.3: eine Aufsicht auf eine bei der Herstellung des Schichtwerkstoffs gemäss Fig.2 verwendete und abschnittsweise mit einer heisshärtenden Haftschicht versehene Bahn aus Isolierstoff.

### WEG ZUR AUSFÜHRUNG DER ERFINDUNG

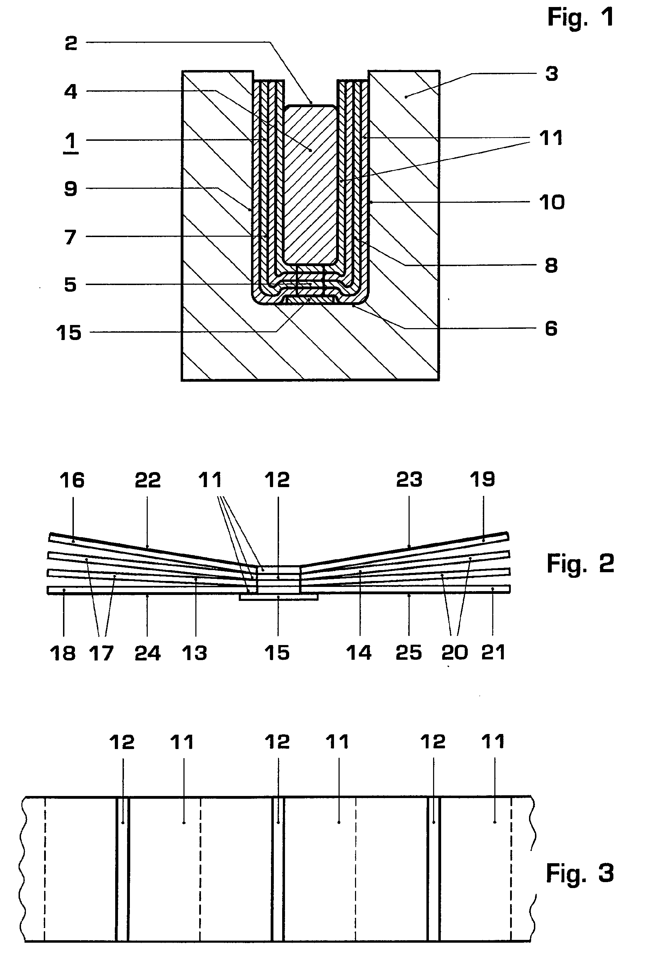

In den Figuren beziehen sich gleiche Bezugszeichen auf gleichwirkende Teile. In Fig. 1 bezeichnet 1 einen in einer Nut 2 eines metallenen Rotors 3 einer rotierenden elektrischen Maschine, beispielsweise eines Hochstromgenerators, eingesetzten und nach Art eines U geformten Isolierkanal. Der Kanal 1 isoliert einen in die Nut 2 eingesetzten Stromleiter 4 gegenüber dem auf Erdpotential befindlichen Rotor 3. Der Isolierkanal ist mit einem die Basis des U bildenden Kanalboden 5 auf dem Grund 6 der Nut gelagert. Zwei die Schenkel des U bildende Wände 7, 8 des Isolierkanals 1 sind an die Flanken 9, 10 der Nut und den Leiter 4 geschmiegt. Der durch den Isolierkanal 1 gegen den geerdeten Rotor 3 elektrisch isolierte und durch einen nicht dargestellten Nutverschluss festgesetzte Leiter 4 fixiert den Isolierkanal 1 in der Nut 2.

Der Isolierkanal 1 ist gebildet von einem beim Einsetzen in die Nut 2 verformten Körper aus Schichtwerkstoff. Der Schichtwerkstoff enthält vier Lagen 11 eines flächig ausgeführten isolierenden Werkstoffs von guter Flexibilität und weist eine durch die dielektrischen und mechanischen Eigenschaften der Nutisolation vorgegebene Werkstoffdicke von typischerweise 0,8 bis 1 Millimeter auf. Die Isolierstofflagen weisen Dicken von beispielsweise ca. 0,18 mm auf. Als Isoliermaterial wird bevorzugt ein hochtemperaturfestes, Fasern und/oder Flocken enthaltendes Papier auf der Basis eines aromatisches Polymers, insbesondere auf der Basis Polyamid, verwendet, wie etwa ein unter dem Markennamen Nomex^{R} im Handel erhältliches Kunststoffpapier. Für gleiche Isolationszwecke können anstelle von vier Isolierstofflagen 11 aus relativ dünnem Material auch zwei Isolierstofflagen aus einem relativ dicken Material oder mehr als vier Lagen aus einem entsprechend dünneren Material verwendet werden. Zwischen den einzelnen Isolierstofflagen können weitere Lagen aus einem hochwertigen Material vorgesehen sein, beispielsweise eine Lage aus einem Material, welches elektrisch höherwertiger, aber mechanisch weniger hoch beanspruchbarer ist als das Material der Isolierstofflagen 11. Eine solche Lage enthält vorzugsweise ein Polyimid und wird in Form einer Folie mit einer Dicke vom typischerweise 0,1 mm verwendet. Durch die Isolierstofflagen 11 ist diese Lage gegen äussere Einwirkungen, hervorgerufen insbesondere durch mechanische Kräfte, gut geschützt.

In Fig.2 ist der Schichtwerkstoff dargestellt, so wie er vor dem Einbau in die Nut 2 vorliegt. In einem als Kanalboden verwendbaren Abschnitt 12 des Schichtwerkstoffs sind die einzelnen Isolierstofflagen 11 mittels eines heissgehärteten Klebers, beispielsweise auf der Basis eines Epoxids oder Polyurethans, starr miteinander verbunden. Zwei links und rechts an den Abschnitt 12 anschliessende Abschnitte 13 und 14 des Schichtwerkstoffs sind gebildet von Abschnitten 16, 17, 18, 19, 20, 21 der Lagen 11, welche jeweils nach Art eines Büschels am Werkstoffabschnitt 12 gehalten sind. Aus diesen Abschnitten werden beim Einbau des Schichtwerkstoffs in die Nut 2 (Fig.1) die Wände 7 und 8 des Isolierkanals 1 und die engen Radien in den beiden Übergangsbereichen des Kanalbodens 5 in die beiden Kanalwände 7, 8 gebildet.

Um den Stromleiter 4 sicher auf dem Nutgrund abzustützen, sind nicht nur die Isolierstofflagen 11 im Abschnitt 12 starr miteinder verbunden, sondern ist zusätzlich noch eine starre Einlage 15 an der untersten 18 der Lagen 11 angebracht, welche mit Vorteil von einem faserverstärkten Kunststoff gebildet ist, etwa von einem mit einem ein- oder mehrlagigen Glasgewebe oder mit einem Glasvlies verstärkten Polyester oder Epoxid, und typischerweise eine Dicke von einem halben bis zu einem Millimeter aufweist.

Die nach aussen weisenden Flächen 22, 23 bzw. 24, 25 der die beiden Büschel nach aussen begrenzenden beiden Lagenabschnitte 16, 18 bzw. 19, 21 sind mit einem chemikalienresistenten, dielektrisch hochwertigen Lack, beispielsweise auf der Basis eines Epoxids, beschichtet. Die einander gegenüberliegenden Flächen der Lagenabschnitte 16 bis 21 sind ebenfalls mit dem chemikalienresistenten, dielektrisch hochwertigen Lack beschichtet, können alternativ aber auch mit einem wärmeschmelzbaren, trockenen Kleblack, vorzugsweise auf der Basis eines Epoxids, beschichtet sein.

Durch die vollständige Beschichtung mit chemikalienresistenten Lack werden nicht nur die dielektrische Eigenschaften der Nutisolation verbessert, sondern es wird vor allem auch die Reibung der einzelnen freiliegenden Lagenabschnitte gegeneinander herabgesetzt. Zugleich wird verhindert, dass die Lagenabschnitte Feuchtigkeit aufnehmen können. Die geringe Reibung und die durch die feuchtigkeitsabweisende Wirkung der Lackbeschichtung begünstigte Bildung glatter, wellenfreier Flächen der Lagenabschnitte begünstigen die Herstellung eines mechanisch und dielektrisch einwandfreien Isolierkanals beim Einlegen des Schichtwerkstoffs in die Nut 2.

Sind die einander gegenüberliegenden Flächen der Lagenabschnitte mit dem wärmeschmelzbaren, trockenen Kleblack beschichtet, so können nach Einbau des Schichtwerkstoffs in die Nut 2 und durch nachfolgendes Erwärmen die einzelnen Lagenabschnitte miteinander verklebt werden. Es kann so ein an die Nutform angepasster Isolierkanal 1 mit verklebten Isolierstofflagen 11 erreicht werden.

Der erfindungsgemässe Schichtwerkstoff kann wie folgt gefertigt werden:
auf eine in Fig.3 dargestellte Bahn einer Isolierstoffolie mit den Lagenabschnitten 11 entsprechender Flächenaufteilung wird im Bereich der Werkstoffabschnitte 12 jeweils eine Haftschicht aus dem heisshärtbaren Kleber aufgetragen. Die Bahn wird dann unter Bildung der Isolierstofflagen 11 längs der gestrichelt angegebenen Linien aufgetrennt. Die mit der Haftschicht versehenen Lagen 11 werden bündig übereinandergestapelt und bei einer die Heisshärtung der Haftschicht ermöglichenden Temperatur miteinander verpresst. Das Verpressen erfolgt mit Vorteil derart schrittweise, dass bei jedem Verpressungsschritt jeweils nur ein Teil des Werkstoffabschnitts 12 gebildet wird. Es können so auch mit kleinen Pressen grossflächige Schichtwerkstoffe hergestellt werden.

Vor dem Aufbringen der Haftschicht wird der Schichtwerkstoff im Bereich des Werkstoffabschnitts 12 flüssigkeitsdicht abgedeckt und danach zur Bildung der zuerst beschriebenen Alternative vollständig mit dem wasserabweisenden, chemikalienresistenten Lack oder zur Bildung der zweiten Alternative zum Teil mit dem chemikalienresistenten Lack und zum anderen Teil mit dem Kleblack beschichtet.

Der so gefertigte Schichtwerkstoff zeichnet sich durch eine hohe Flexibilität und eine grosse mechanische und dielektrische Festigkeit aus. Wegen der hohen Flexibilität kann er mit geringer Kraft verformt werden und kann so unmittelbar vor Ort unter Bildung des Isolierkanals 1 in die Nut 2 eingesetzt werden (Fig.1). Die gute Verformbarkeit ist vor allem darauf zurückzuführen, dass die freiliegenden Abschnitte der Isolierstofflagen 11 lediglich an einem am Kanalboden 5 fixierten Scheitel festgesetzt sind, sich sonst aber auf über ihre gesamte Oberfläche frei gegeneinander verschieben lassen. Insbesondere im Bereich enger Radien, wie etwa am Übergang vom Kanalboden 5 zu den Kanalwänden 7, 8, werden Überdehnung und Knickung einzelner Fasern des Isoliermaterials und damit eine mechanische und dielektrische Schwächung der einzelnen Isolierstofflagen 11 vermieden. Ein Einreissen und Auswandern des Isolierkanals 1 infolge der hohen Fliehkräfte beim Betrieb der Maschine sowie elektrische Durchschläge können so auch nach langer Betriebsdauer der Maschine ausgeschlossen werden.

Aus Fig.1 ist ersichtlich, dass das Versteifungselement bis auf einige Millimeter an die den Übergang des Nutgrundes 6 in die Nutflanken 9, 10 bewirkenden engen Krümmungsradien der Nut herangeführt ist. Der Raum zwischen den Enden des Versteifungselements und den Radien wird von stark gekrümmten Bereichen der zweiten Werkstoffabschnitte 13, 14 eingenommen. So werden besonders gute mechanische und dielektrische Eigenschaften der Nutisolation erreicht.

Da sich die Werkstoffabschnitte 13 und 14 beim Einbau in die Nut 2 praktisch kräftefrei an jede beliebige Nutform, gleichgültig ob sie abgewinkelt oder abgestuft ausgeführt ist, anpassen, können mit einigen wenigen lediglich durch die Breite der Nut bestimmten Typen von Schichtwerkstoffen U-förmige Isolierkanäle für geometrisch beliebig konfigurierte Nutisolationen gefertigt werden. Hierbei ist es fertigungstechnisch von besonderem Vorteil, dass der Schichtwerkstoff durch geeignetes Zuschneiden vor Ort an die Geometrie der Nut angepasst werden kann.

### Bezugszeichenliste

- 1: Isolierkanal
- 2: Nut
- 3: Rotor
- 4: Stromleiter
- 5: Kanalboden
- 6: Nutgrund
- 7, 8: Kanalwände
- 9, 10: Nutflanken
- 11: Isolierstofflagen
- 12, 13, 14: Werkstoffabschnitte
- 15: Versteifungselement
- 16 bis 21: Lagenabschnitte
- 22 bis 25: Aussenflächen der Lagenabschnitte

## Patentansprüche

1. Schichtwerkstoff zur Fertigung eines nach Art eines U geformten Isolierkanals (1), enthaltend mehrere stoffschlüssig miteinander verbundene Lagen (11) eines flexibel ausgeführten, flächigen Isolierstoffs, bei dem ein als Kanalboden (5) verwendbarer und der Basis des U entsprechender erster Werkstoffabschnitt (12) steif und zwei an den ersten Abschnitt anschliessende, als Kanalwand (9, 10) verwendbare und den beiden Schenkeln des U entsprechende zweite Werkstoffabschnitte (13, 14) flexibel ausgebildet sind, **dadurch gekennzeichnet, dass** die beiden zweiten Werkstoffabschnitte (13, 14) gebildet sind von Abschnitten (16, 17, 18; 19, 20, 21) der Lagen (11), die jeweils nach Art eines Büschels am ersten Werkstoffabschnitt (12) gehalten sind.

2. Schichtwerkstoff nach Anspruch 1, **dadurch gekennzeichnet, dass** mindestens die nach aussen weisenden Flächen (22, 23; 24, 25) der das Büschel nach aussen begrenzenden beiden Lagenabschnitte (16, 18; 19, 21) mit einem chemikalienresistenten, dielektrisch hochwertigen Lack beschichtet sind.

3. Schichtwerkstoff nach Anspruch 2, **dadurch gekennzeichnet, dass** die einander gegenüberliegenden Flächen der Lagenabschnitte mit einem wärmeschmelzbaren, trockenen Kleblack beschichtet sind.

4. Schichtwerkstoff nach Anspruch 2, **dadurch gekennzeichnet, dass** die einander gegenüberliegenden Flächen der Lagenabschnitte ebenfalls mit dem chemikalienresistenten, dielektrisch hochwertigen Lack beschichtet sind.

5. Schichtwerkstoff nach einem der Ansprüche 1 bis 4, **dadurch gekennzeichnet, dass** am ersten Werkstoffabschnitt (12) ein Versteifungselement (15) angebracht ist.

6. Verfahren zur Herstellung des Schichtwerkstoffs nach einem der Ansprüche 1 bis 5, **dadurch gekennzeichnet, dass** vor oder nach Bereitstellung der Isolierstofflagen (11) auf den flächigen Isolierstoff im Bereich des ersten Werkstoffabschnitts (12) eine heisshärtbare Haftschicht aufgebracht wird, und dass mit der Haftschicht versehene Isolierstofflagen (11) bündig übereinandergestapelt und bei einer die Heisshärtung der Haftschicht ermöglichenden Temperatur miteinander verpresst werden.

7. Verfahren nach Anspruch 6, **dadurch gekennzeichnet, dass** das Verpressen derart schrittweise erfolgt, dass bei jedem Verpressungsschritt jeweils nur ein Teil des ersten Werkstoffabschnitts (11) gebildet wird.

8. Verfahren nach einem der Ansprüche 6 oder 7, **dadurch gekennzeichnet, dass** der flächige Isolierstoff vor dem Aufbringen der Haftschicht im Bereich des ersten Werkstoffabschnitts (12) flüssigkeitsdicht abgedeckt und danach mit einem chemikalienbeständigen, dielektrisch hochwertigen Lack und mit einem gegebenenfalls zusätzlich verwendeten, wärmeschmelzbaren, trockenen Kleblack beschichtet wird.

9. Isolierkanal (1) aus einem Schichtwerkstoff nach einem der Ansprüche 1 bis 5, **dadurch gekennzeichnet, dass** die Kanalwände (7, 8) durch Verformung der Lagenabschnitte (16, 17, 18, 19, 20, 21) während des Einbaus des Schichtwerkstoffs und eines elektrischen Leiters (4) in die Nut (2) einer elektrischen Maschine gebildet sind.

10. Isolierkanal nach Anspruch 9, **dadurch gekennzeichnet, dass** zwischen dem Kanalboden (5) und den Kanalwänden (7, 8) vorgesehene stark gekrümmte Bereiche des Kanals (1) von Teilen der zweiten Werkstoffabschnitte (13, 14) gebildet sind.

11. Isolierkanal nach Anspruch 10, **dadurch gekennzeichnet, dass** ein am ersten Werkstoffabschnitt (12) angebrachtes Versteifungselement (15) bis auf wenige Millimeter an den Übergang des Grundes (6) der Nut (2) in deren Flanken (9, 10) bewirkende Krümmungsradien herangeführt sind.
